# EUROPEAN PATENT APPLICATION

(11) **EP 4 737 746 A2**
(43) Date of publication of application: **06.05.2026**
(21) Application number: 26160533.1
(22) Date of filing: 11.08.2021
(51) Int. Cl.: F16B 12/20

(54) **ASSEMBLY APPARATUS FOR FURNITURE**

(30) Priority: 19.08.2020 TR 202013140
(62) Divisional of application: 21190834.8
(71) Applicant: Mesan Plastik Ve Metal Sanayi Anonim Sirketi, 34590 Silivri Istanbul (TR)
(72) Inventor: Mertoz, Aliosman, 34590 Istanbul (TR)
(74) Representative: Mutlu, Aydin

(57) **Abstract**

The present invention relates to an assembly apparatus used in joints of furniture panels which minimizes the production and assembly difficulties of standard connection elements used for connecting two panels to each other.

## Description

### Technical Field of the Invention

The present invention relates to an intermediate assembly apparatus used in panel furniture production to minimize the production and assembly difficulties of standard connection elements used for connecting two panels to each other.

### Background of the Invention

Furniture pieces created by forming wood are products that are used in almost every field and have many different types as of today. Furniture, which is an indispensable part of all living spaces with different designs, is created by combining a plurality of parts. The desired furniture structure is created by combining different furniture parts that are ready for assembly with auxiliary elements and connection apparatuses. Since furniture units are used for multiple purposes, the sizes and qualities of the loads exposed on them during use vary greatly. In some cases, they may be under the influence of noticeably light loads, while in some other cases; they may be under the influence of extremely heavy loads. The stability and durability of the furniture under load depend on the physical and mechanical properties of the materials from which the elements are produced by means of combining methods. Furthermore, the fasteners that connect the furniture parts also affect the strength of the furniture.

Today, the production and use of modular furniture have become widespread so as to minimize the transportation costs and to prevent potential physical damages on the products during transportation. The consumption of furniture sold out in demounted form increases day by day. Furniture manufacturers and manufacturer suppliers also make significant efforts to develop new production technologies for disassembled furniture. Accessories and fasteners used in furniture are also being developed in order to facilitate both the production and assembly of furniture.

Nowadays, for the production of furniture, selection of correct connection elements, which are highly durable, easily producible and transportable in parts, and readily mountable and that may be disassembled and reassembled if the preference of the area of use of the end-user changes in the long term, is very important. Fasteners are elements or mechanisms that are capable of connecting at least two furniture units or furniture parts or any other material by pulling them towards each other through a mechanical process. Said fasteners not only ensure the completion of the furniture but also ensure its functionality.

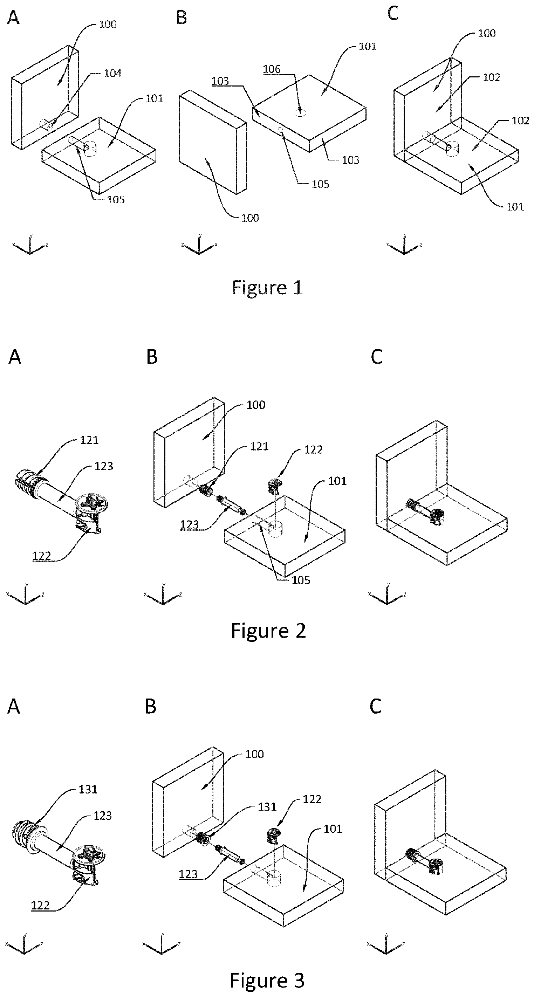

Figure 1 illustrates the views of two prototype panels that constitute the panel furniture from different angles. In the description provided below, the fixed one of said panels will be defined as the fixed panel (100). The other panel to be attached to the fixed panel (100) will be defined as the panel to be fixed (101). The fixed panel (100) and the panel to be fixed (101), which will be described here, have a rectangular prismatic structure with a specific wall thickness. The term upper surface of the panel will be defined as the panel upper surface (102) that extends parallel to the width and length of the panel board. The side surfaces of panel that are parallel to the wall thickness of the panel board will be defined as the edge and/or the panel side surface (103) as used in the sector.

The properties of the fasteners used in the installation of disassembled panel furniture vary based on the field of use. The fields of use, the raw materials from which they are produced, and the materials used in the furniture affect the connection performance of the fasteners. Hence, the performance achieved with each of the fasteners varies depending on said variables. The main criteria that play a role in the selection and development of the furniture fasteners can be summarized as follows;
- Providing high strength to the furniture to be assembled;
- Not having any negative effects on the aesthetic appearance of the furniture;
- Enabling practical processing and drilling processes on the application points of fasteners (surfaces, edges of panels, etc.);
- Ensuring that an efficient and easy assembly may be performed.

DE202004000473U1 discloses a fitting for connecting hollow plates, particularly honeycomb plates, sandwich plates, or the like, which includes a clamping part which is rotatably mounted in a housing and which receives the head of a corresponding tightening bolt which is provided with threads at the free end thereof. A guide tube for a tightening bolt having an extended length is provided on the housing whereas the guide tube may consist of a single piece with the housing.

The present invention aims to provide alternative connection assemblies for use in furnitures in order to alleviate or overcome the shortcomings of the existing systems. For realizing this objective, the invention provides an intermediate assembly apparatus which is devoleped on the basis of the following connection principles:

| | |
|---|---|
| Type 1 Connection; | Drop-in plastic dowel + screw shaft + eccentric body connection set |
| | *Figure 2A, Figure 2B, and Figure 2C* *illustrate the application details on the connection set defined as Type 1 and the prototype fixed panel (100) and the panel to be fixed (101).* |
| Type 2 Connection; | Metal screw threaded dowel + screw shaft + eccentric body connection set |
| | *Figure 3A, Figure 3B, and Figure 3C* *illustrate the application details on the connection set defined as Type 2 and the prototype fixed panel (100) and the panel to be fixed (101).* |
| Type 3 Connection; | Fastening set with self-plugging shaft + eccentric body |
| | *Figure 4A, Figure 4B, and Figure 4C* *illustrate the application details on the connection set defined as Type 3 and the prototype fixed panel (100) and the panel to be fixed (101).* |
| Type 4 Connection; | Screw-in metal dowel + screw shaft + setscrew body connection set |
| | *Figure 5A, Figure 5B, and Figure 5C* *illustrate the application details on the connection set defined as Type 4 and the prototype fixed panel (100) and the panel to be fixed (101).* |
| Type 5 Connection; | Plastic screw threaded dowel + screw shaft + setscrew body connection set |
| | *Figure 6A, Figure 6B, and Figure 6C* *illustrate the application details on the connection set defined as Type 5 and the prototype fixed panel (100) and the panel to be fixed (101).* |
| Type 6 Connection; | Cylinder puller screw connection set |
| | *Figure 7A, Figure 7B, and Figure 7C* *illustrate the application details on the connection set defined as Type 6 and the prototype fixed panel (100) and the panel to be fixed (101).* |
| Type 7 Connection; | Eccentric puller connection set for movable panels |
| | *Figure 8A, Figure 8B, and Figure 8C* *illustrate the application details on the connection set defined as Type 7 and the prototype fixed panel (100) and the panel to be fixed (101).* |
| Type 8 Connection; | Double holder eccentric puller connection set |
| | *Figure 9A, Figure 9B, and Figure 9C* *illustrate the application details on the connection set defined as Type 8 and the prototype fixed panel (100) and the panel to be fixed (101).* |
| Type 9 Connection; | Connection set with screw puller plastic body |
| | *Figure 10A, Figure 10B, and Figure 10C* *illustrate the application details on the connection set defined as Type 9 and the prototype fixed panel (100) and the panel to be fixed (101).* |

In the following description, the aforementioned fasteners will be referred to with their type names due to their long descriptions. Along with the type, the body element property will also be included in the definition.

The joining structure of many connection groups, which are developed similar to the eccentric body connection sets, is also designed similar to the eccentric body connection elements. Likewise, openings (drilling processes) are formed on the panel for the application of eccentric body connection sets which are defined as Type 1, Type 2, and Type 3, and setscrew screw body connection sets defined as Type 4 and Type 5 and cylinder puller screw connection sets defined as Type 6 among the fasteners listed above. The first of the two wood-containing panel boards to be joined is considered as a fixed panel (100), and a hole, a screw hole (104) is drilled on the panel upper surface (102) for screwing in a dowel or cylindrical puller system among these six systems. A body connection hole (106) is in the form of an opening on the panel upper surface (102) for the body connection element in the panel to be fixed (101). In addition, a gap, an edge hole (105) is opened on the panel side surface (103) of the panel to be fixed (101), which is called an edge in the sector such that it is perpendicular to the body connection hole (106).

The application structures of Type 1, Type 2, Type 3, Type 4, and Type 5 connection sets are very similar to each other. In these connection sets, the fixed panel (100) is first attached to the panel upper surface (102) with a dowel or a self-doweled shaft. These dowels are divided into two categories as plastic dowels (121) and metal dowels (131) according to the type of the produced material. As for self-doweled shafts (141), they are designed to serve both as a dowel and as a mounting shaft. Metal shafts (formed shaft (123), setscrew puller shaft (151)) are fixed to the plastic dowel (121) or metal dowel (131) attached to the fixed panel (100). Eccentric puller connections defined as Type 1 and Type 2 utilize formed shafts (123) that are formed according to the gripping structure of the eccentric puller body element (122). The connection sets defined as Type 3 use self doweled shafts (141). Setscrew puller connection sets defined as Type 4 and Type 5 employ setscrew puller shaft (151) that is formed according to the setscrew puller body element (152). After the shafts (formed shaft (123), self-doweled shaft (141), setscrew puller shaft (151)) are fixed on the fixed panel (100), the shaft (formed shaft (123), self-doweled shaft (141), setscrew puller shaft (151)) located on the fixed panel (100) is inserted through the edge hole (105) of the panel to be fixed (101) to which the shaft will be fixed and subsequently, it is grabbed by means of the body elements (eccentric puller body element (122), setscrew puller body element (152)) and fixed by pulling. In this fixing process, in Type 1, Type 2, and Type 3 eccentric connection sets, the eccentric puller body element (122) is rotated by means of a screwdriver and the clamped shaft (formed shaft (123), self doweled shaft (141)) and the fixed panel (100) and the panel to be fixed (101) are fixed to each other. In Type 4 and Type 5 setscrew body connection sets, the setscrew (153), advancing towards the puller shaft cavity (154) on the setscrew puller shaft (151), gets tightened by pulling the setscrew puller shaft (151).

When using a Type 6 cylinder puller screw connection set, the puller screw (171), that is inserted into the puller screw hole (173) which is a through-hole opened without using the dowel, reaches the nut threads inside the cylinder puller body (172) through the edge hole (105) opened from the panel side surface (103) and the panels are connected by screw puller.

Eccentric body connection sets defined as Type 1, Type 2, and Type 3 and cylindrical puller connection sets defined as Type 6 are connection groups are easy to use, durable, and long-lasting, whereas setscrew body connection sets defined Type 4 and Type 5 are the connection groups that can be preferred in furnitures that require high strength and provide a strong fixation.

As described in detail above, gaps (holes) created by wood panel processing to be applied for the use of all connection sets defined as Type 1, Type 2, Type 3, Type 4, Type 5 and Type 6 are the same in terms of axis and standard. A novel intermediate assembly apparatus has been developed by considering the advantages and disadvantages arising from the use of the fasteners as described above.

### Brief Description of the Invention

The present invention provides intermediate assembly apparatus as defined in claim 1. Preferred features of the invention are set out in the dependent claims. The assembly apparatus according to the present invention is fixed into a hole created on the panel upper surface (102) of the panel to be fixed (101), and it allows the use of eccentric puller connection sets defined as Type 1, Type 2, and Type 3, setscrew puller connection sets defined as Type 4, Type 5, and cylindrical puller connection sets defined as Type 6. The need to drill holes from the panel side surface (103) is eliminated by means of the intermediate assembly apparatus (200) located on the panel to be fixed (101). A more durable, more practical, more ergonomic and high-tolerance installations can be carried out by means of the present invention. The fixed panel (100) to be joined and the panel to be fixed (101) can be fixed to each other without forming a protrusion on the surface of the panels.

The connection sets listed in the following can be used without drilling holes on the panel side surfaces (103) of the panel to be fixed (101) and only with the intermediate assembly apparatus slot (201) opened on the panel upper surface (102) by means of the intermediate assembly apparatus (200).

The working principles of the intermediate assembly apparatus according to the present invention involve the basic connection types as follows which can vary as demonstrated within the referenced figures:

| | |
|---|---|
| Type 1 Connection; 2A) | Drop-in plastic dowel + screw shaft + eccentric body connection set (Figure |
| | *The assembly details of the connections made by using the Type 1 connection set and the Intermediate assembly apparatus (200) (3- Hole form) are illustrated in* *Figure 20A and Figure 20B**.* |
| | *The assembly details of the connections made by using the Type 1 connection set and the Intermediate assembly apparatus (200) (2- Hole form) are illustrated in* *Figure 26A and Figure 26B**.* |
| Type 2 Connection; (Figure 3A) | Metal screw threaded dowel + screw shaft + eccentric body connection set |
| | *The assembly details of the connections made by using the Type 2 connection set and the Intermediate assembly apparatus (200) (3- Hole form) are illustrated in* *Figure 21A and Figure 21B**.* |
| | *The assembly details of the connections made by using the Type 2 connection set and the Intermediate assembly apparatus (200) (2- Hole form) are illustrated in* *Figure 27A and Figure 27B**.* |
| Type 3 Connection; | Self doweled shaft + eccentric body connection set (Figure 4A) |
| | *The assembly details of the connections made by using the Type 3 connection set and the Intermediate assembly apparatus (200) (3- Hole form) are illustrated in* *Figure 22A and Figure 22B**.* |
| | *The assembly details of the connections made by using the Type 3 connection set and the Intermediate assembly apparatus (200) (2- Hole form) are illustrated in* *Figure 28A and Figure 28B**.* |
| Type 4 Connection; 5A) | Drop-in plastic dowel + screw shaft + setscrew body connection set (Figure |
| | *The assembly details of the connections made by using the Type 4 connection set and the Intermediate assembly apparatus (200) (3- Hole form) are illustrated in* *Figure 24A and Figure 24B**.* |
| | *The assembly details of the connections made by using the Type 4 connection set and the Intermediate assembly apparatus (200) (2- Hole form) are illustrated in* *Figure 30A and Figure 30B**.* |
| Type 5 Connection; (Figure 6A) | Metal screw threaded dowel + screw shaft + setscrew body connection set |
| | *The assembly details of the connections made using the Type 5 connection set and the Intermediate assembly apparatus (200) (3- Hole form) are illustrated in* *Figure 23A and Figure 23B**.* |
| | *The assembly details of the connections made using the Type 5 connection set and the Intermediate assembly apparatus (200) (2- Hole form) are illustrated in* *Figure 29A and Figure 29B**.* |
| Type 6 Connection; | Cylinder puller screw connection set (Figure 7A) |
| | *The assembly details of the connections made by using the Type 6 connection set and the Intermediate assembly apparatus (200) (3- Hole form) are illustrated in* *Figure 25A and Figure 25B**.* |
| | *The assembly details of the connections made by using the Type 6 connection set and the Intermediate assembly apparatus (200) (2- Hole form) are illustrated in* *Figure 31A and Figure 31B**.* |

### Description of the Figures

FIGURE 1 illustrates the view of two prototype panels forming a panel furniture (1A: illustrates isometric view, 1B: illustrates the separate perspective view of panels, 1C: illustrates the assembled perspective view).
FIGURE 2 illustrates the Type 1 Connection-Drop-in plastic dowel + screw shaft + eccentric body connection set (2A: illustrates Type 1 connection set, 2B: illustrates the holes drilled into panels for the assembly of Type 1 connection set and demonstration of mounting in panels, 2C: illustrates the Type 1 connection set assembled in the holes in panels).
FIGURE 3 illustrates the Type 2 Connection-Metal screw-threaded dowel + screw shaft + eccentric body connection set (3A: illustrates Type 2 connection set, 3B: illustrates holes drilled into panels for the assembly of Type 2 connection set and demonstration of mounting in panels, 3C: illustrates the Type 2 connection set assembled in the holes in panels).

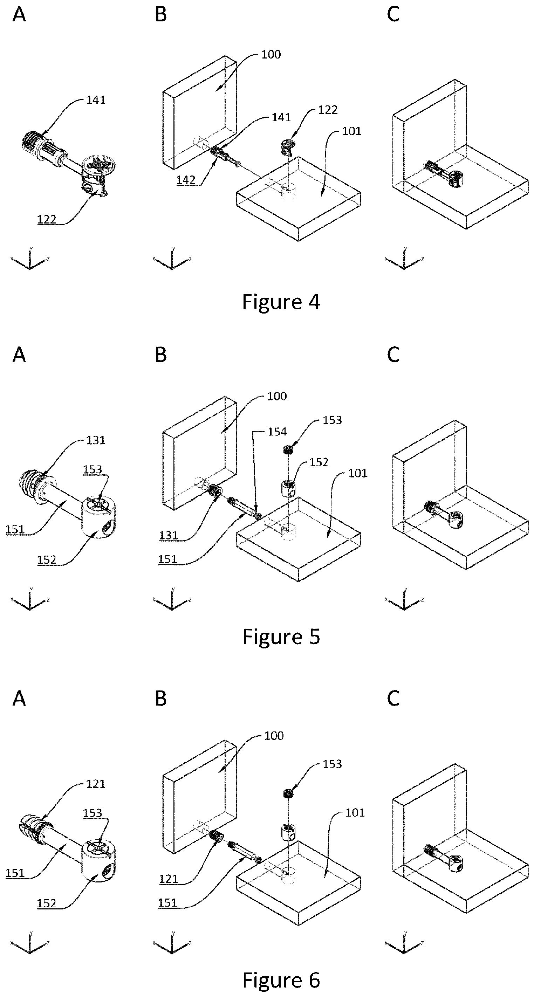

FIGURE 4 illustrates the Type 3 Connection-fastening set with self-doweled shaft + eccentric body (4A: illustrates the Type 3 connection set, 4B: illustrates the holes drilled into panels for the assembly of Type 3 connection set and demonstration of mounting in panels, 4C: illustrates the Type 3 connection set assembled in the holes in panels).
FIGURE 5 illustrates the Type 4 Connection-Drop-in plastic dowel + screw shaft + setscrew body connection set (5A: illustrates the Type 4 connection set, 5B: illustrates holes drilled into panels for the assembly of Type 4 connection set and demonstration of mounting in panels, 5C: illustrates the Type 4 connection set assembled in the holes in panels).
FIGURE 6 illustrates Type 5 Connection-Metal screw-threaded dowel + screw shaft + setscrew body connection set (6A: illustrates the Type 5 connection set, 6B: illustrates the holes drilled into panels for the assembly of Type 5 connection set and demonstration of mounting in panels, 6C: illustrates the Type 5 connection set assembled in the holes in panels).

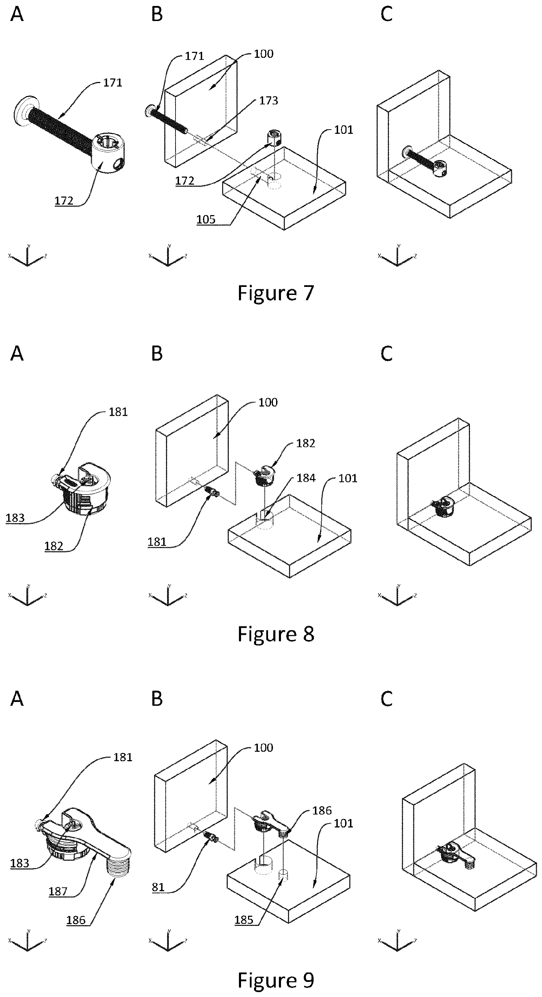

FIGURE 7 illustrates the Type 6 Connection-Cylinder puller screw connection set (7A: illustrates the Type 6 connection set, 7B: illustrates the holes drilled into panels for the assembly of Type 6 connection set and demonstration of mounting in panels, 7C: illustrates the Type 6 connection set assembled in the holes in panels).
FIGURE 8 illustrates the Type 7 Connection- Eccentric puller connection set for movable panels (8A: illustrates the Type 7 connection set, 8B: illustrates the holes drilled into panels for the assembly of Type 7 connection set and demonstration of mounting in panels, 8C: illustrates the Type 7 connection set assembled in the holes in panels).
FIGURE 9 illustrates the Type 8 Connection-Double holder eccentric puller connection set (9A: illustrates the Type 8 connection set, 9B: illustrates the holes drilled into panels for the assembly of Type 8 connection set and demonstration of mounting in panels, 9C: illustrates the Type 8 connection set assembled in the holes in panels).
FIGURE 10 illustrates the Type 9 Connection-connection set with screw puller plastic body (10A: illustrates the Type 9 connection set, 10B: illustrates the holes drilled into panels for the assembly of Type 9 connection set and demonstration of mounting in panels, 10C: illustrates the Type 9 connection set assembled in the holes in panels) 10D: illustrates the Type 9 tightening the connection set screw with angled Allen screw.
FIGURE 11 illustrates the view of the mounting holes drilled on the panels where the intermediate mounting apparatus subjected to the invention will be placed (11A: illustrates the isometric representation of mounting holes on individual panels, 11B: illustrates the perspective view of mounting holes on panels, 11C: illustrates the isometric representation of mounting holes on assembled panels, 11D: illustrates the top view of the holes drilled for the intermediate assembly apparatus).
FIGURE 12 illustrates the top perspective view of the 3-hole form of the intermediate assembly apparatus subjected to the invention.
FIGURE 13 illustrates the top perspective view of the 2-hole form of the intermediate assembly apparatus subjected to the invention.
FIGURE 14 illustrates the bottom perspective view of the 3-hole form of the intermediate assembly apparatus subjected to the invention.
FIGURE 15 illustrates the bottom perspective view of the 2-hole form of the intermediate assembly apparatus subjected to the invention.
FIGURE 16 illustrates the top perspective view of the 3-hole form apparatus subjected to the invention.
FIGURE 17 illustrates the top perspective view of the 2-hole form apparatus subjected to the invention.
FIGURE 18 illustrates the top perspective view of the 3-hole form of the intermediate assembly apparatus subjected to the invention with the body element therein.
FIGURE 19 illustrates the top perspective view of the 2-hole form of the intermediate assembly apparatus subjected to the invention with the body element therein.

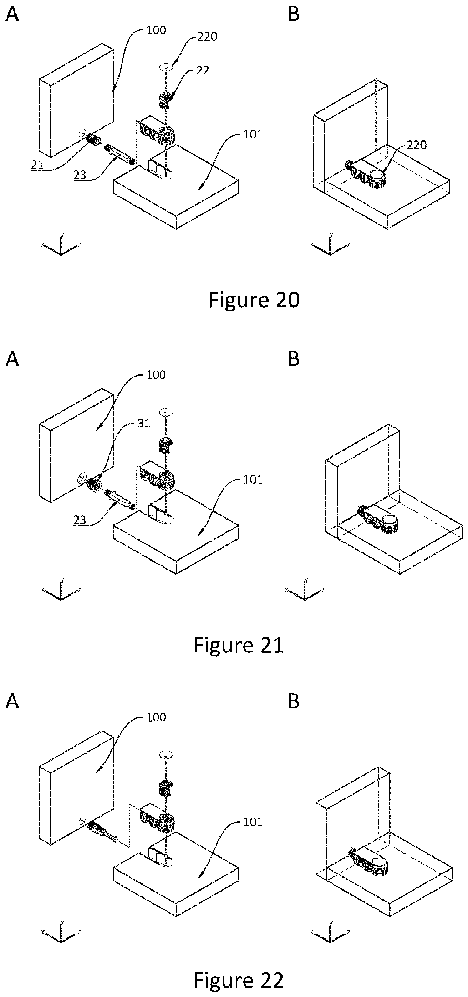

FIGURE 20 illustrates the top perspective view of the assembly of a 3-hole form of the intermediate assembly apparatus subjected to the invention with a Type 1 connection set (20A: illustrates the exploded assembly view, 20B: illustrates the assembled view).
FIGURE 21 illustrates the assembly view of a 3-hole form of the intermediate assembly apparatus subjected to the invention with a Type 2 connection set (21A: illustrates the exploded assembly view, 21B: illustrates the assembled view).
FIGURE 22 illustrates the assembly view of a 3-hole form of the intermediate assembly apparatus subjected to the invention with a Type 3 connection set (22A: illustrates the exploded assembly view, 22B: illustrates the assembled view).

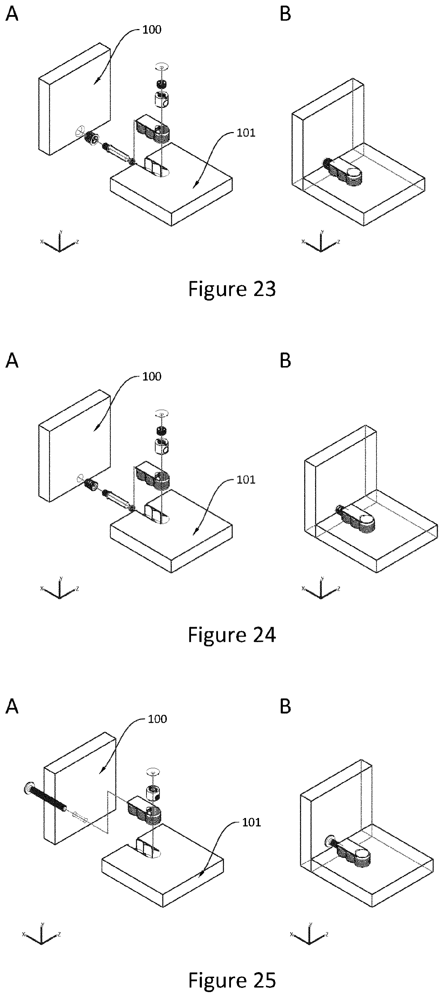

FIGURE 23 illustrates the assembly view of a 3-hole form of the intermediate assembly apparatus subjected to the invention with a Type 4 connection set (23A: illustrates the exploded assembly view, 23B: illustrates the assembled view).
FIGURE 24 illustrates the assembly view of a 3-hole form of the intermediate assembly apparatus subjected to the invention with a Type 5 connection set (24A: illustrates the exploded assembly view, 24B: illustrates the assembled view).
FIGURE 25 illustrates the assembly view of a 3-hole form of the intermediate assembly apparatus subjected to the invention with a Type 6 connection set (25A: illustrates the exploded assembly view, 25B: illustrates the assembled view).

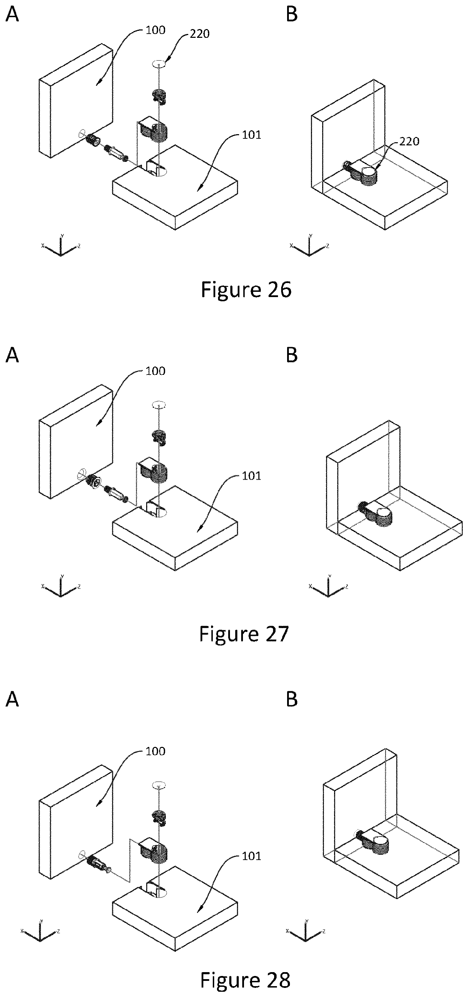

FIGURE 26 illustrates the assembly view of a 2-hole form of the intermediate assembly apparatus subjected to the invention with a Type 1 connection set (60A: illustrates the exploded assembly view, 26B: illustrates the assembled view).
FIGURE 27 illustrates the assembly view of a 2-hole form of the intermediate assembly apparatus subjected to the invention with a Type 2 connection set (27A: illustrates the exploded assembly view, 27B: illustrates the assembled view).
FIGURE 28 illustrates the assembly view of a 2-hole form of the intermediate assembly apparatus subjected to the invention with a Type 3 connection set (28A: illustrates the exploded assembly view, 28B: illustrates the assembled view).

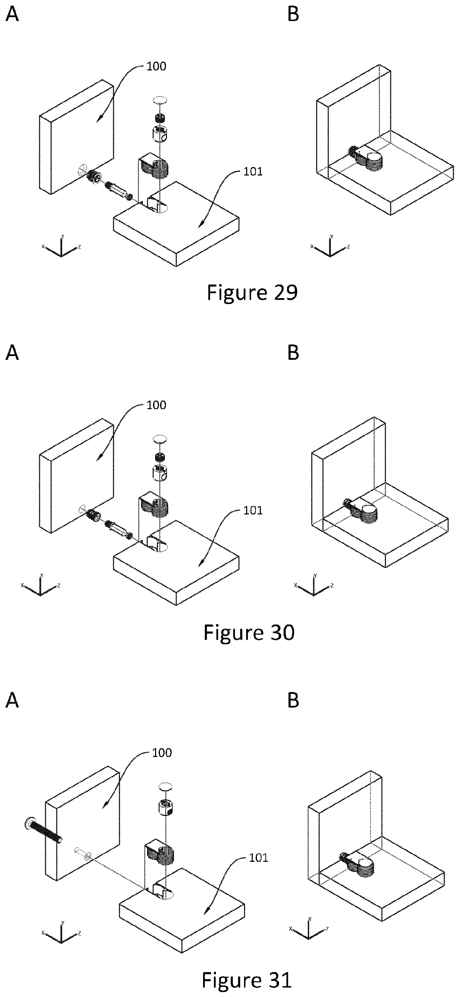

FIGURE 29 illustrates the assembly view of a 2-hole form of the intermediate assembly apparatus subjected to the invention with a Type 4 connection set (29A: illustrates the exploded assembly view, 29B: illustrates the assembled view).
FIGURE 30 illustrates the assembly view of a 2-hole form of the intermediate assembly apparatus subjected to the invention with a Type 5 connection set (30A: illustrates the exploded assembly view, 30B: illustrates the assembled view).
FIGURE 31 illustrates the assembly view of a 2-hole form of the intermediate assembly apparatus subjected to the invention with a Type 6 connection set (31A: illustrates the exploded assembly view, 31B: illustrates the assembled view).

### Description of the References in the Figures

100. Fixed panel
101. Panel to be fixed
102. Panel upper surface
103. Panel side surface
104. Screw hole
105. Edge hole
106. Body connection hole
121. Plastic dowel
122. Eccentric puller body element
123. Formed shaft
131. Metal dowel
141. Self-doweled shaft
142. Skirt
151. Setscrew puller shaft
152. Setscrew puller body element
153. Setscrew
154. Puller shaft cavity
171. Puller screw
172. Cylinder puller body
173. Puller screw hole
181. Eccentric puller screw
182. Eccentric puller connection set body
183. Eccentric Puller
184. Surface Hole
185. Retaining hole
186 Second holder
187. Plastic body
191. Body cover
192. Setscrew plastic part
193. Pre-mounted screw
194. Double hole
195. Allen key
196. Cap
200. Intermediate assembly apparatus
201. Intermediate assembly apparatus slot
202. Panel hole rectangular pocket
212. Apparatus facade surface
213. Shaft slot
214 Screw threads
215. Apparatus back surface
216. Body element slot
217. Apparatus upper surface
218. Thread
219. Recess section
220. Cover
230. Circular body
231. Apparatus bottom surface

### Detailed Description of the Invention

The present invention relates to an intermediate assembly apparatus (200) that is used to connect a fixed panel (100) to be joined and a panel to be fixed (101), designed particularly for disassembled furniture structures produced by using panels with wood content. Said intermediate assembly apparatus (200) is used to provide connection of a panel to be fixed (101) to a shaft or a puller screw (171) that is attached to a fixed panel (100) by means of screwing in various furniture such as cabinet, bedstead, table etc. where panel boards with wood content that are desired to be fixed to each other are used.

The intermediate assembly apparatus (200) of the invention is used with standard fasteners that have been used in the industry for many years for the purpose of fixing panels, which make up a piece of furniture. The production and assembly stages applied in the use of the invention are specified in the following, respectively.

***Stage 1-**The processing of the panel boards that will form the furniture on the panel processing benches.* At this stage, the processes to be carried out only on the upper surfaces of the panels (102) that make up the furniture are sufficient for the use of the intermediate assembly apparatus (200). While using the intermediate assembly apparatus (200), no drilling process is required on the panel side surface (103). The present invention ensures that the connection sets defined as Type 1, Type 2, Type 3, Type 4, Type 5 and Type 6, may be used without performing any process from the panel side surface (103).

***Stage 2-*** Attaching a plastic dowel (121) or metal dowel (131) to the screw hole (104) drilled on the fixed panel (100), which will enable the fixing shaft (formed shaft (123), setscrew puller shaft (151)) to be fastened. As a different alternative, this plastic dowel (121) or metal dowel (131) may be attached directly to the screw holes (104) drilled on the fixed panel (100) in self-doweled shafts (141). Again as an alternative, the cylindrical puller screw (171) may be used with said intermediate assembly apparatus (200) by being placed into the puller screw hole (173) opened on the fixed panel (100).

***Stage 3-*** The assembly shafts (formed shaft (123), setscrew puller shaft (151)) to be used are fixed to the nut cavity in the inner section of the plastic dowel (121) or metal dowel (131) that are fixed by means of screw threads at their end points. In the cylindrical puller system defined as Type 6, the puller screw (171) that will provide the connection is attached thoroughly into the puller screw hole (173) that is opened to the fixed panel (100).

***Stage 4-*** The intermediate assembly apparatus (200) of the invention is hammered into the intermediate assembly apparatus slot (201) opened from the panel upper surface (102) of the panel to be fixed (101), for instance, by means of a plastic hammer. During this process, the screw threads (214) on the side surface of the said intermediate assembly apparatus (200) enable the intermediate assembly apparatus (200) to be attached to the panel to be fixed (101).

***Stage 5-*** Placing the eccentric puller body element (122) or the setscrew puller body element (152) or the cylinder puller body (172) into the body element slot (216) located on the upper surface of the intermediate assembly apparatus (200).

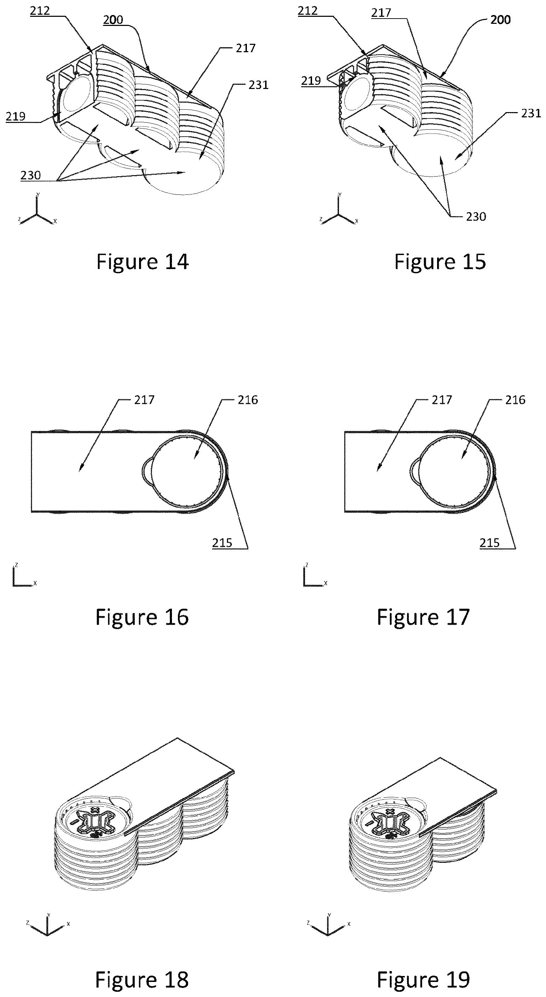

The top views of the two-hole form and the three-hole form of the intermediate assembly apparatus (200) are illustrated in Figures 16 and 17. When viewed from the top, the apparatus upper surface (217) of the intermediate assembly apparatus (200) is in the closed form, in the section close to the apparatus back surface (215), there is a body element slot (216) of the assembly body element, where the eccentric puller body element (122) or the setscrew puller body element (152) or the cylinder puller body (172) can be placed.

The body element slot (216) is a circular cavity, and alternative body elements (eccentric puller body element (122) or setscrew puller body element (152) or cylinder puller body (172)) are positioned therein. The body element slot (216) is on the central "y" axis, it starts from the apparatus upper surface (217) and ending at the apparatus bottom surface (231) by leaving a minimum space. The body element slot (216) has an open structure on the apparatus upper surface (217), it houses the body element (eccentric puller body (122) or setscrew puller body (152) or cylinder puller (172)) to be placed inside such that its bottom is closed on the apparatus bottom surface (231). Threads (218) are formed towards the apparatus bottom surface (231), starting from the apparatus upper surface (217) within the body element housing (216) so as to prevent the body element (eccentric puller body element (122) or setscrew puller body element (152) or cylinder puller body (172)) to be placed in the body element slot (216) from coming out by swinging back from there.

After the body element (eccentric puller body element (122) or setscrew puller body element (152) or cylinder puller body (172)) is inserted into the body element slot (216) by means of the opened threads (218), tight coupling is ensured, and back oscillation is prevented. After the assembly of body elements without threads (218) and which are inserted into the body connection holes (106), especially drilled into wood panels (eccentric puller body (122) or setscrew puller body (152) or cylinder puller body (172)), the pulling process often causes swinging back. Similarly, before the panels are joined, the body elements (eccentric puller body (122) or setscrew puller body (152) or cylinder puller body (172)) inserted into the body connection holes (106) opened in the wooden panels can fall off by releasing from the slot during transportation and assembly. These defects are eliminated by means of the intermediate assembly apparatus (200), and the body element (eccentric puller body (122) or setscrew puller body (152) or cylinder puller body (172)) is prevented from coming out of the slot and swinging back after fixing. In Figure 18 and Figure 19, it is seen that the body elements (eccentric puller body (122) or setscrew puller body (152) or cylinder puller body (172)) are placed inside alternative intermediate assembly apparatus (200).

***Stage 6*-** Alignment of connecting shaft (formed shaft (123) or self-doweled shaft (141) or setscrew puller shaft (151)) or cylindrical puller screw (171) to the shaft slot (213) located in the facade area of the intermediate assembly apparatus (200) which is fixed onto the panel to be fixed (101) and then placing the screw or shaft up to the center of the coupling or the puller by pushing the panel towards the shaft or screw.

The shaft slot (213) of the intermediate assembly apparatus (200) of the invention is in the form of a circular cavity, which extends starting from the apparatus facade surface (212) to be created, to the body element slot (216) such that its center is on the "x" axis. The shaft slot (213) is a circular cavity which guides the connecting shaft (formed shaft (123) or self-doweled shaft (141) or setscrew puller shaft (151)) and has a geometric form and diameter compatible with connecting shaft (formed shaft (123) or self-doweled shaft (141) or setscrew puller shaft (151)) so as to insert them through it, to advance the same along the intermediate assembly apparatus (200) to meet the body element (eccentric puller body element (122) or setscrew puller body element (152) or cylinder puller body (172)) located in the body element slot (216). The shaft slot (213) is positioned anywhere on the apparatus facade surface (212) and particularly close to the apparatus bottom surface (231). The diameter of the shaft slot (213) may vary according to the size of the panels (fixed panel (100) and the panel to be fixed (101)) to be assembled to each other and to the size of assembly shaft (formed shaft (123) or self doweled shaft (141) or setscrew puller shaft (151)) and cylindrical puller screw (171) to be used for joining these panels (fixed panel (100) and the panel to be fixed (101)).

After the shaft slot (213) located on the apparatus facade surface (212) is aligned with the connecting shaft (formed shaft (123) or self-doweled shaft (141) or setscrew puller shaft (151)) or cylindrical puller screw (171), the panel side surface (103) of the panel to be fixed (101) is pushed towards the fixed panel (100), and in the meantime the process is completed by advancing the assembly shaft (formed shaft (123) or self-doweled shaft (141) or setscrew puller shaft (151) or cylinder puller screw (171) to the grip or pulling center of the body element that will perform fixing.

***Stage* 7-** In the use of connecting sets defined as Type 1, Type 2, Type 3, Type 4, and Type 5 of the intermediate assembly apparatus (200), locking of the mounting apparatus is provided by pulling it with a screwdriver placed in the screwdriver slot on the body element (eccentric puller body element (122) or setscrew puller body element (152)) placed in the body element slot (216).

There are steps such that the body element (eccentric puller body element (122) or setscrew puller body element (152)) grasps at the end portions of the connecting shafts (formed shaft (123) or self doweled shaft (141) or setscrew puller shaft (151)) used with connection sets defined as Type 1, Type 2, Type 3, Type 4, and Type 5. End points of the shafts (formed shaft (123) or self-doweled shaft (141) or setscrew pullershaft (151)) facing the direction of the panel to be fixed (101) generally have the same diameter with the shaft (formed shaft (123) or self-doweled shaft (141) or setscrew puller shaft (151)). When moving forward from the end point, this diameter size is designed in a stepwise form, which narrows first and then expands again until it reaches the same diameter size of the shaft (formed shaft (123) or self-doweled shaft (141) or setscrew puller shaft (151)).

The body elements (eccentric puller body element (122) or setscrew puller body element (152)) grasp the shaft (formed shaft (123) or self-doweled shaft (141) or setscrew puller shaft (151)) from the narrow step on the shaft (formed shaft (123) or self-doweled shaft (141) or setscrew puller shaft (151)) by means of this stepwise structure, and when the body element (eccentric puller body element (122) or setscrew puller body element (152)) is rotated with a screwdriver, it pulls the shafts (formed shaft (123) or self-doweled shaft (141) or setscrew puller shaft (151)) towards the center of their body.

While using type 6 defined connection set, the assembly of the cylinder puller screw (171), which is inserted into the puller screw hole (173) in the form of a full hole drilled on the fixed panel (100), is performed by rotating the same with a standard alien key (195). After the puller screw (171) is attached to the screw slot inside the cylinder puller body (172) placed in the upper slot of the intermediate assembly apparatus (200), the puller screw (171) tightened with an alien key (195) ensures that the panel to be fixed (101) is fixed by pulling it to the fixed panel (100).

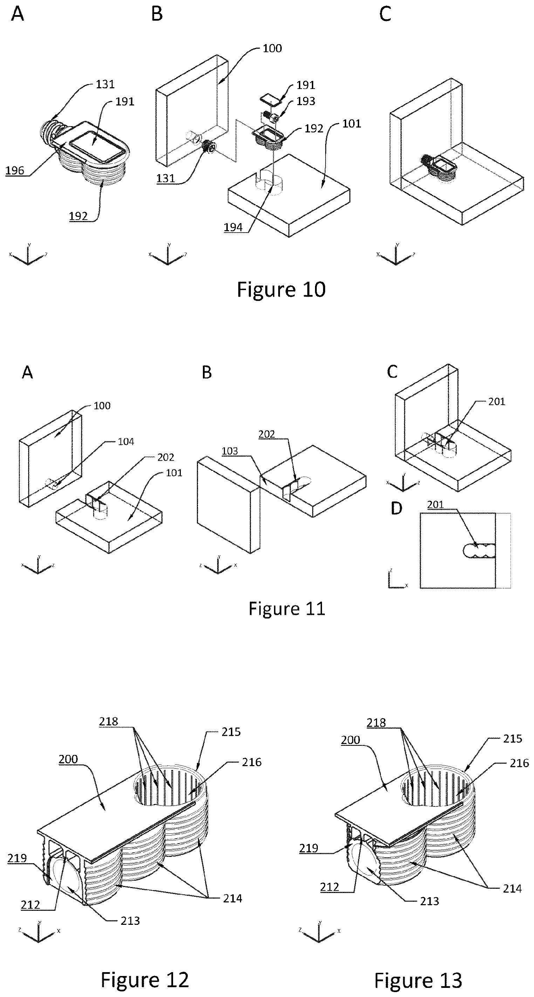

An examplary perspective view of the intermediate assembly apparatus (200) is given in Figure 12 and Figure 13. The geometric form of the intermediate assembly apparatus (200) has been formed in a manner such that it is compatible with the geometric form of the holes or slots to be formed on the panels in the processing to be performed on the panel processing benches. Here, since the drilling bits used in the processing of the panels (fixed panel (100) and the panel to be fixed (101)) on the machining bench make circular movements and form holes or slots, even when creating a long slot, the created slot actually consists of the combination of a plurality of hole forms. In other words, a circular intermediate assembly apparatus slot (201) is formed on the panel (fixed panel (100) and the panel to be fixed (101)) or forms with a plurality of circular intermediate assembly apparatus slot (201) are formed due to the circular mark left by each end of the drilling bit where it contacts. This is an indispensable geometric form due to the processing technique of wood processing benches. For this reason, the geometric form of the intermediate assembly apparatus (200) of the invention also has an appearance consisting of the combination of at least two circular bodies (230). In Figures 14 and 15, perspective views of the lower surface of the intermediate assembly apparatus (200) of the triple hole form (Figure 14) and the double hole form (Figure 15), which are two different forms of the intermediate assembly apparatus (200), are given. Here, a body consisting of at least two circular bodies (230) is observed. In Figure 11, intermediate assembly apparatus slot (201) of the panels to be connected (fixed panel (100), the panel to be fixed (101)) opened on the panel processing benches and the screw hole (104) drilled for dowels (formed shaft (123), setscrew puller shaft (151)) is shown. As it can be understood from here, forming the slots and holes drilled on the panel (fixed panel (100) and the panel to be fixed (101)) in panel processing benches from nested holes in a circular form or as a combination of a plurality of circles is a necessity due to the technical function of the panel processing machine. The geometric form of the intermediate assembly apparatus (200) is designed to be compatible with this intermediate assembly apparatus slot (201) due to this technique of the panel processing machine.

There are skirts (142) at the dowel starting points of the self-doweled shafts (141) in Type 3 connection sets. In case these skirts (142) are pressed towards the fixed panel (100) so as to attach the self-doweled shaft (141), they prevent the self-doweled shaft (141) from advancing in the drilled hole. However, these skirts (142) cause gaps between the connection surfaces during the fastening of the fixed panel (100) and the panel to be fixed (101) depending on their protruding structure. The amount of these gaps between the two panels (fixed panel (100) and the panel to be fixed (101)) is minimized by crushing the wooden surface of the self-doweled shaft (141) remaining in between as a result of pulling two panels (fixed panel (100) and panel to be fixed (101)) together by applying excessive force in assembly applications of connection sets defined Type 3. Performing pulling process by applying extra force in this manner may cause consequences such as breaking and damaging the eccentric puller element body (122). This drawback is eliminated with the recess section (219) formed around the starting point of the shaft slot (213) on the apparatus facade surface (212) of the intermediate assembly apparatus (200). The dowel holder skirts (142) are placed in this recess section (219) and do not cause any gaps in the connection interfaces.

A second-step gap, which is called rectangular pocket is created in the processing systems with the hole forms drilled on the panel to be fixed (101) where the intermediate assembly apparatus (200) of the invention is fixed. This gap is created in the form of a panel hole rectangular pocket (202) with a width, which is not exceeding the diameters of the holes of the intermediate assembly apparatus slot (201) where the intermediate assembly apparatus (200) will be located, and creating the gap is left to the user's choice. This gap is created in case the user requires the apparatus upper surface (217) of the intermediate assembly apparatus (200) as a cap and the panel upper surface (102) of the panel to be fixed (101) are at the same height. In Figure 11A and Figure 11B, this panel hole rectangular pocket (202) can be seen from different angles. After forming the intermediate assembly apparatus slot (201) on the panel to be fixed (101), the apparatus upper surface (217) of the intermediate assembly apparatus (200) placed in the intermediate assembly apparatus slot (201) and the panel upper surface (102) of the panel to be fixed (101) are aligned. Due to the fact that the panel to be fixed (101) and the apparatus upper surface (217) of the intermediate assembly apparatus (200) are in alignment, the width length of the apparatus upper surface (217) has the same length with the diameter of the circular bodies (230) of the intermediate assembly apparatus (200), drawer rails and other furniture elements that can coincide with the surfaces on which the intermediate assembly apparatus (200) are located can be fully attached to the surface. This problem, which occurs in Type 9 connection sets, can be eliminated by using connection sets defined as Type 1, Type 2, Type 3, Type 4, Type 5 and Type 6 together with the intermediate assembly apparatus (200).

In Type 9 connection sets, the fixation with support of the plastic step inside the setscrew plastic part (192) of the connection element with the pre-mounted screw (193) attached to the plastic dowel (121) on the fixed panel (100) causes to question the durability of the connection system. The number of fasteners to be used in joining the panels has been increased in order to eliminate this problem. Concordantly, the number of fasteners used at each junction is increased, thus, this has a negative impact on production costs.

Aligning the pre-mounted screw (193), which is placed into the channel of the setscrew plastic part (192) positioned onto the panel to be fixed (101) in Type 9 connection sets, to the metal dowel (131) located on the fixed panel (100) and fixing it reduce the efficiency of installation during the assembly process.

The assembly of panels (fixed panel (100) and panel to be fixed (101)) to each other is ensured by aligning the shaft slot (213) hole of the intermediate assembly apparatus (200) on the panel to be fixed (101) to the connecting shaft (formed shaft (123) or self-doweled shaft (141) or setscrew puller shaft (151)) on the fixed panel (100) and then pushing the panel to be fixed (101) towards the fixed panel (100). Attaching the intermediate assembly apparatus (200) on the panel to be fixed (101) to the fixed assembly shaft (formed shaft (123) or self-doweled shaft (141) or setscrew puller shaft (151)) is more practical than assemblies made with Type 9 defined connection sets. The necessity of completely aligning the end point of the pre-mounted screw (193) to the hole of the metal dowel (131) also makes the assembly conditions difficult during assembling the pre-mounted screw (193) used in the Type 9 connection sets to the metal dowel (131) on the fixed panel (100).

Due to the fact that the diameter of the shaft slot (213) of the intermediate assembly apparatus (200) is larger and the diameter of the connecting shafts (formed shaft (123) or self-doweled shaft (141) or setscrew puller shaft (151)) and cylindrical puller screws (171) is approximately 20% smaller than the shaft slot (213) of the intermediate assembly apparatus (200), assembly can be performed under more tolerant conditions by means of using the intermediate assembly apparatus (200) and connection sets defined as Type 1, Type 2, Type 3, Type 4, Type 5 and Type 6 in combination.

Processing errors below 1 mm that occur in dowel holes drilled on fixed panels (100) can be eliminated at the assembly state by means of this tolerance. After aligning the panels (fixed panel (100) and the panel to be fixed (101)) with respect to other panels while performing pulling process during fixing process, corner extensions, which are particularly formed in corner joint panels, can be removed by pulling. In Type 9 connection sets, fixation is made with pre-mounted screw (193) and the pre-mounted screw (193) must be attached to the threads of the metal dowel (131) by full alignment. In the assemblies performed under these conditions, the tolerance ratios are realized at minimum levels. Measurement errors and protrusions occur at the junction points of the panels in improper drilling processes.

It is possible to use the panels produced with the intermediate assembly apparatus slot (201) to be created from the panel upper surface (102) during the panel processing stages, connection sets of Type 1, Type 2, Type 3, Type 4, Type 5 and Type 6, which have high assembly tolerance ratios, can be used by means of the present invention. This deficiency is eliminated by providing assembly with high tolerance rates by using the intermediate assembly apparatus (200) and connection sets defined as Type 1, Type 2, Type 3, Type 4, Type 5 and Type 6 together.

In Type 9 defined connection sets, the processes of attaching the pre-mounted screw (193) placed in the setscrew plastic part (192) into the hole of metal dowel (131) by means of the alien key (195) with angled-tip and tightening the same makes assembly conditions difficult. In Type 9 defined connection sets, using an alien key (195) with an angled tip, which is a special tool, and using this alien key (195) by turning it at an angle to the operation area during the fixing of the screw, causes negative results both in terms of ergonomics and in terms of the efficiency of assembly and installation processes.

Connection sets defined as Type 1, Type 2, Type 3, Type 4, Type 5 can be mounted in a practical and ergonomic way at right angles to the work area by using a standard screwdriver together with the intermediate assembly apparatus (200) placed in the intermediate assembly apparatus slot (201) created on the furniture panel uppersurfaces (102) by means of the present invention. Type 6 defined connection sets can be mounted in a practical and ergonomic manner at a right angle to the work area by using a standard alien key (195).

A cover (220) may be used such that the body element (eccentric puller body element (122) or setscrew puller body element (152)) and the body element slot (216) are not visible, after the joining process of the two panels (fixed panel (100) and the panel to be fixed (101)) by means of the intermediate assembly apparatus (200) of the invention as described above. The cover (220) is designed such that it fully fits into the cavity on the inner section of the screwdriver slot on the body elements (eccentric puller body (122) or setscrew puller body (152)) or roller puller (172)). The cover (220) is closed in a manner such that it fits completely into the channel. The cover (220) has a detachable structure so that the body element (eccentric puller body element (122) or setscrew puller body element (152)) or cylinder puller body (172)) can be opened and closed when desired.

As a summary, the present invention provides an intermediate assembly apparatus (200) which, once fixed into an intermediate assembly apparatus slot (201) created on the upper surface (102) of the panel to be fixed (101), enables the easy assembly of panels, namely the fixed panel (100) and the panel to be fixed (101), in panel-type furniture. The apparatus allows the use of connection sets whose reliability are proved without requiring any process on the panel side surfaces (103) of the panels to be fixed (101). The present invention provides a connection, which is more durable, practically applicable, ergonomic and having a high assembly tolerance, when compared to the existing alternative connection elements in the industry.

## Claims

1. An intermediate assembly apparatus (200) for joining a fixed panel (100) and a panel to be fixed (101) of a furniture, wherein the intermediate assembly apparatus is positioned in an intermediate assembly apparatus slot (201), which is created on a panel upper surface (102), without drilling a hole from a panel side surface (103) of the panel to be fixed (101), the intermediate assembly apparatus (200) comprises;
a circular body (230) having a body element slot (216) therein in the form of a circular cavity into which an eccentric puller connection set, a setscrew puller connection set or a cylindrical puller connection set is placed, and
a shaft slot (213) having a circular cavity and guiding any one of a formed shaft (123), a self-doweled shaft (141), a setscrew puller shaft (151) and a cylindrical puller shaft (171) so as to insert one of said assembly shafts through an apparatus facade surface (212) and move along the intermediate assembly apparatus (200) to meet with the eccentric puller connection set or the setscrew puller connection set or the cylindrical puller connection set element located in the body element slot (216).

2. An intermediate assembly apparatus (200) according to claim 1 further comprising a recess section (219) which prevents formation of gaps between the connection surfaces during attachment of the fixed panel (100) and the panel to be fixed (101), and is formed around a starting point of the shaft slot (213) on the apparatus facade surface (212) of the intermediate assembly apparatus (200).

3. An intermediate assembly apparatus (200) according to claim 1 wherein upper surface (217) of the apparatus is in a closed form up to the body element slot (216).

4. An intermediate assembly apparatus (200) according to claim 1 wherein said body element slot (216) has an open top portion on an upper surface (217) of the apparatus and a closed lower portion on a bottom surface (231) of the apparatus so that any one of the eccentric puller connection sets, or any one of the setscrew puller connection sets, or any one of the cylindrical puller connection sets is positioned inside said body element slot (216).

5. An intermediate assembly apparatus (200) according to claim 1 wherein the shaft slot (213) is located on a facade surface (212) of the apparatus, especially close to a bottom surface (231) of the apparatus.

6. An intermediate assembly apparatus (200) according to claim 1 wherein the body element slot (216) has threads (218) positioned inside the body element slot (216) extending from an upper surface (217) of the apparatus towards a closed lower portion on a bottom surface (231) of the apparatus.

7. An intermediate assembly apparatus (200) according to claim 1 wherein the circular body (230) of the apparatus comprises threads (214) on its outer surface.
